# FASCICULE DE BREVET EUROPEEN

(11) **EP 0 728 634 B1**
(45) Date de publication et mention de la délivrance du brevet: **17.05.2000**
(21) Numéro de dépôt: 96400313.1
(22) Date de dépôt: 15.02.1996
(51) Int. Cl.: B60R 21/26

(54) **Générateur pyrotechnique de gaz pour coussin gonflable d'un véhicule automobile**
Pyrotechnischer Aufblaser für einen Kraftfahrzeug-Gassack
Pyrotechnic inflator for a vehicle air bag

(30) Priorité: 23.02.1995 FR 9502100
(43) Date de publication de la demande: 28.08.1996
(73) Titulaire: S.N.C. LIVBAG, 91710 Vert Le Petit (FR)
(72) Inventeur: Marsaud, Benoit, F-27830 Neaufles Saint Martin (FR); Perotto, Christian, F-91610 Ballancourt (FR); Duvacquier, Daniel, F-33300 Bordeaux (FR); Kozyreff, Michel, F-76240 Bonsecours (FR)
(74) Mandataire: Pech, Bernard

(56) Documents cités:
- EP-A- 0 403 857
- EP-A- 0 609 981
- DE-A- 3 733 436
- DE-A- 4 129 541
- FR-A- 2 691 706
- US-A- 4 370 930
- US-A- 4 865 635
- US-A- 5 366 239
- PATENT ABSTRACTS OF JAPAN vol. 17 no. 497 (M-1476) ,8 Septembre 1993 & JP-A-05 124481 (DAICEL CHEM IND LTD) 21 Mai 1993,

## Description

La présente invention se rapporte au domaine de la protection des occupants d'un véhicule automobile en cas d'accident.

Plus précisément l'invention concerne un générateur pyrotechnique de gaz destiné à gonfler, en cas d'accident, un coussin de protection. Le générateur qui fait l'objet de la présente invention est plus particulièrement destiné à être placé dans le volant du véhicule et à assurer la protection du conducteur.

On connaît de nombreux générateurs pyrotechniques de gaz destinés à assurer la protection du conducteur d'un véhicule. La structure de ces générateurs est fonction de la nature et de la forme du chargement pyrotechnique employé.

Une première famille de composition pyrotechniques utilisées en matière de sécurité automobile est constituée par les mélanges d'azotures alcalins ou alcalinoterreux et de composés métalliques.

En raison de la difficulté d'agglomérer de tels mélanges, les chargements pyrotechniques constitués à partir de cette famille de compositions sont le plus souvent sous forme d'une multiplicité de petits chargements élémentaires : granulés, pastilles, disques, etc...

Ainsi le brevet US-A-5 308 588 décrit un générateur de gaz contenant comme chargement pyrotechnique une pluralité de disques annulaires de compositions pyrotechniques à base d'azoture.

Le chargement, contenu dans une boîte cylindrique en aluminium de structure relativement complexe, est placé dans un générateur équipé de chambres de filtration en raison de la teneur élevée en poussières chaudes des gaz provenant de la combustion des compositions à base d'azoture. De tels générateurs qui sont également décrits dans le brevet EP-A-0 609 981, sont relativement complexes à réaliser et leur prix de revient demeure élevé.

Une seconde famille de compositions pyrotechniques est constituée par les mélanges de nitrocellulose et de nitroglycérine, encore connus sous l'appellation de "poudres à double base".

Ces compositions sont intéressantes car elles se prêtent bien à une mise en oeuvre en continu permettant, par extrusion, d'obtenir des chargements sous forme de blocs annulaires faciles à utiliser dans une chaîne d'assemblage en continu de générateurs de gaz. Par ailleurs ces compositions brûlent en produisant peu de résidus solides et ne nécessitent pas la présence de dispositifs de filtration dans le générateur. Par contre ces compositions produisent des gaz présentant une teneur relativement élevée en monoxyde de carbone qui impose la présence dans le générateur d'organes complémentaires d'oxydation comme décrit par exemple dans le brevet FR-A-2 691 706 (correspondant au préambule de la revendication indépendante). Par ailleurs ces compositions présentent certaines limites dans leur tenue thermique lors de programme de simulation accélérée de vieillissement.

Une troisième famille de compositions pyrotechniques est constituée par les mélanges de liant organique et de charges oxydantes, notamment à base de perchlorates minéraux. Ces compositions sont intéressantes mais pour conduire à des chargements à géométrie stable elles imposent l'emploi d'un liant réticulable très difficile jusqu'à présent à mettre en oeuvre par des procédés continus. Pour cette raison l'homme de métier n'a pas spécialement développé ce type de compositions pour la sécurité automobile, et n'a pas développé non plus de générateurs de gaz qui leur soient adaptés.

Les progrès récents accomplis dans le domaine de l'extrusion en continu des propergols à liant réticulable, et notamment des propergols à liant silicone, redonnent de l'intérêt aux chargements de cette troisième famille, mais l'homme de métier ne dispose pas d'un générateur simple, facile à assembler en continu, et qui soit adapté à ce type de compositions.

L'objet de la présente invention est précisément de proposer un tel générateur.

L'invention concerne donc un générateur pyrotechnique de gaz pour coussin gonflable destiné à protéger les occupants d'un véhicule automobile comprenant :
**i)** un corps cylindrique creux constitué par une base circulaire prolongée par une paroi latérale cylindrique, la dite paroi latérale présentant à son extrémité solidaire de la dite base des orifices mettant en communication l'intérieur et l'extérieur du dit corps creux,
**ii)** une bague circulaire de fermeture possédant un orifice central dans lequel est fixé, de manière étanche aux gaz, un dispositif d'allumage cylindrique qui pénètre à l'intérieur du dit corps creux,
**iii)** un chargement pyrotechnique en forme de bloc annulaire disposé à l'intérieur du dit corps creux autour du dit dispositif d'allumage, la hauteur du dit chargement annulaire étant inférieure à la distance existant à l'intérieur du dit corps creux entre les surfaces intérieures de la bague de fermeture et de la dite base et l'épaisseur maximale du dit chargement annulaire étant inférieure à la distance radiale séparant, à l'intérieur du dit corps creux, la surface intérieure de la paroi latérale et le dispositif d'allumage,
le dit générateur étant caractérisé en ce que :
**iv)** la bague circulaire de fermeture est sertie dans l'extrémité de la paroi latérale opposée à la dite base,
**v)** le dit chargement pyrotechnique est un propergol à liant silicone chargé avec un mélange de perchlorate d'ammonium et de nitrate de sodium,
**vi)** des moyens de calage qui laissent circuler les gaz sont disposés entre la bague de fermeture et le chargement d'une part, et entre la base et le chargement d'autre part, de manière à ce que les gaz provenant du dispositif d'allumage puissent enrober l'intégralité des surfaces libres du chargement pyrotechnique,
**vii)** et en ce qu'à l'intérieur du dit corps creux, une enveloppe de métal fin est interposée entre le dit chargement et les surfaces intérieures de la dite paroi latérale et de la dite base, de façon à obturer, de manière étanche aux gaz, les dits orifices.

Selon un premier mode préféré de réalisation de l'invention, le chargement pyrotechnique annulaire comporte une pluralité de canaux cylindriques creux internes dont les axes sont équidistants de l'axe du corps du générateur.

Selon un second mode préféré de réalisation de l'invention la bague de fermeture possède une face supérieure plane et une face inférieure formant, avec la dite face supérieure, un rebord arrondi sur lequel est effectué le sertissage de l'extrémité de la paroi latérale du corps du générateur opposée à la dite base. Ce mode de réalisation permet un dessertissage de la bague de fermeture comme mode de rupture unique en cas de surpression accidentelle dans le générateur.

Dans la présente description le terme "supérieur" s'appliquera à tout objet orienté vers la base du corps du générateur, tandis que le terme "inférieur" s'appliquera à tout objet orienté vers l'extrémité de la paroi latérale du corps du générateur opposée à la dite base.

Selon ce mode de réalisation, un col cylindrique creux présentant une extrémité amincie sera emmanché de manière étanche dans l'orifice central présenté par la bague de fermeture et le dispositif d'allumage comprendra un capuchon cylindrique qui entourera le dit col, un inflammateur étant serti de manière étanche aux gaz dans l'extrémité amincie du dit col. L'espace compris entre le dit capuchon et le dit inflammateur sera avantageusement rempli par une poudre d'allumage, comme, par exemple, une poudre à base de bore et de nitrate de potassium, du type B/KNO₃.

Selon une première variante préférée de l'invention la dite enveloppe de métal fin a la forme d'un boîtier cylindrique fermé à l'une de ses extrémités par une face circulaire, l'autre extrémité étant ouverte. Selon cette variante l'extrémité ouverte du boîtier cylindrique sera avantageusement pincée dans le sertissage de la bague de fermeture par l'extrémité inférieure de la paroi latérale du corps du générateur.

Selon une seconde variante préférée de l'invention la dite enveloppe de métal fin a la forme d'un boîtier cylindrique fermé à son extrémité supérieure par une face sensiblement plane et à son extrémité inférieure par une face circulaire présentant un logement cylindrique central dans lequel peut venir se loger le dispositif d'allumage porté par la bague de fermeture du générateur.

Selon cette seconde variante, chacune des faces circulaires du dit boîtier peut incorporer les moyens de calages du chargement pyrotechnique sous forme de bossages cylindriques ou de nervures radiales qui laissent circuler les gaz, ce qui conduit à une simplification intéressante de l'assemblage du générateur.

Quelle que soit la variante choisie, l'enveloppe de métal fin joue le rôle d'opercule pour les orifices portés par la paroi latérale du corps du générateur.

Elle doit donc pouvoir se rompre sous l'effet d'une augmentation prédéterminée de la pression à l'intérieur du corps du générateur. Le seuil de rupture de cette enveloppe correspondra en général à une augmentation de pression de l'ordre de 10 MPa (100 bars). Cette enveloppe sera avantageusement constituée par une feuille mince d'aluminium.

Selon un troisième mode préféré de réalisation de l'invention la paroi latérale du corps du générateur présente un épaulement externe qui est situé sous les dits orifices et qui supporte une bague extérieure.

Selon ce mode de réalisation, la base du corps du générateur comporte un rebord périphérique qui permet de fixer par sertissage un diffuseur annulaire externe sur le pourtour de la base. Ce diffuseur externe surplombe la bague extérieure.

Dans l'espace compris entre la bague extérieure et le diffuseur sont alors coincés un déflecteur et un condenseur constitué par une pluralité de grilles métalliques.

La bague extérieure présente avantageusement sur sa face supérieure au moins une nervure permettant d'assurer un positionnement correct du déflecteur et du condenseur.

L'invention permet ainsi de disposer d'un générateur de gaz dont l'architecture est très simple et dont l'assemblage peut être entièrement automatisé.

Le chargement pyrotechnique composite selon l'invention a un rendement gazeux excellent. Les seuls résidus solides produits, la silice et le chlorure de sodium, sont fixés par condensation sur les grilles du condenseur.

Par ailleurs ce type de chargement peut être obtenu en continu par extrusion avec un prix de revient très avantageux.

On donne ci-après une description détaillée d'une réalisation préférée de l'invention en se référant aux figures 1 à 8.

La figure 1 représente, vu en coupe, un générateur selon l'invention dans lequel l'enveloppe de métal fin du chargement pyrotechnique correspond à la première variante préférée.

La figure 2 représente, vu en perspective partiellement éclatée, un bloc annulaire de chargement pyrotechnique selon l'invention.

La figure 3 représente, vu en coupe, l'enveloppe de métal fin avant sa mise en place dans le générateur de la figure 1.

La figure 4 représente une coupe agrandie de la partie L de la figure 1.

La figure 5 représente, vu en coupe, un générateur selon l'invention dans lequel l'enveloppe de métal fin correspond à la seconde variante préférée.

La figure 6 représente, en vue de dessus, le boîtier de métal fin utilisé dans le générateur représenté à la figure 5.

La figure 7 représente, en vue coupée de face, selon VII-VII, les deux éléments constitutifs du boîtier représenté à la figure 6.

La figure 8 représente, une vue de dessus de l'élément inférieur représenté à la figure 7.

L'invention concerne donc un générateur pyrotechnique de gaz 1 destiné à gonfler un coussin de protection pour occupants d'un véhicule automobile.

Le générateur 1 comprend un corps cylindrique creux constitué par une base circulaire 2 prolongé par une paroi cylindrique 3.

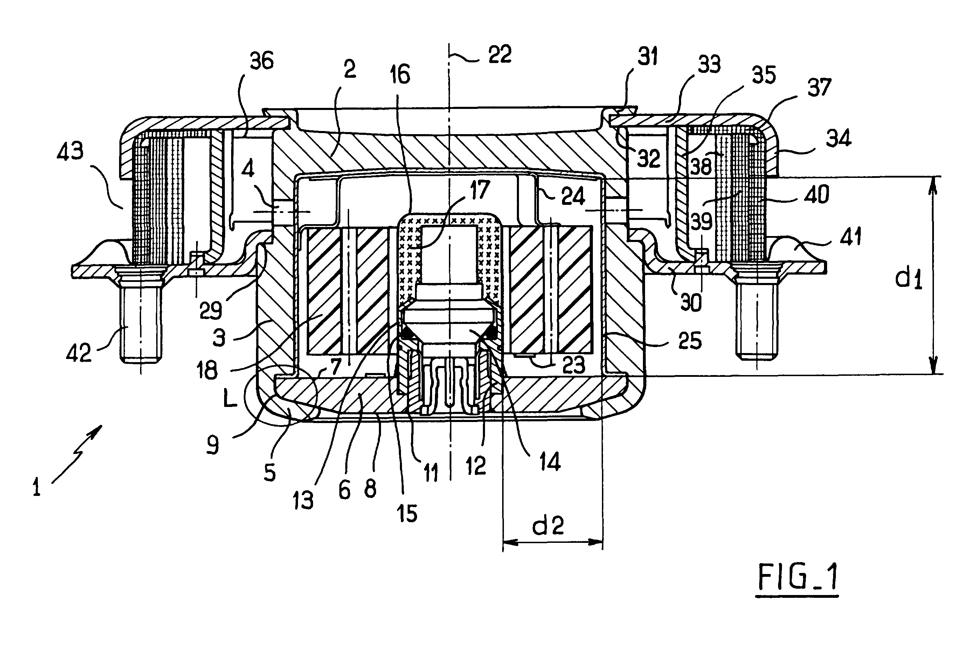

La base 2 et la paroi latérale 3 sont préférentiellement en métal léger d'un seul tenant de manière à former une pièce unique comme représenté à la figure 1. La paroi latérale 3 est traversée par plusieurs orifices creux 4 en général cylindriques. Ces orifices disposés dans la partie supérieure de la paroi latérale 3 à proximité de la base 2 mettent en communication l'intérieur et l'extérieur du corps du générateur. La paroi latérale 3 est terminée dans sa partie inférieure par une extrémité amincie 5 susceptible d'être sertie.

Le corps du générateur 1 est fermé par une bague de fermeture 6 sertie dans l'extrémité amincie 5 de la paroi latérale 3 du corps du générateur.

Avantageusement, comme représenté à la figure 1, la base 2 du corps du générateur 1 est pleine et ne comporte aucune ouverture tandis que la bague de fermeture 6 possède une face supérieure plane 7 et une face inférieure 8 formant avec la dite face supérieure 7 un rebord arrondi 9. L'extrémité 5 de la paroi latérale 3 est donc sertie sur un rebord arrondi 9 et peut être dessertie, en cas de surpression accidentelle dans le générateur 1, avec éjection de la bague de fermeture 6. Si cette dernière est orientée vers la colonne de direction du véhicule, la base 2 étant orientée vers l'occupant du véhicule, on dispose ainsi d'un générateur muni d'une ouverture de sécurité en cas de surpression accidentelle.

La bague de fermeture 6 possède un orifice central cylindrique 11 dans lequel est emmanché, de manière étanche aux gaz, un col cylindrique creux 12 présentant une extrémité libre amincie 13. Préférentiellement ce col sera constitué par un métal relativement souple, comme par exemple un acier inoxydable.

Un inflammateur 14 est serti de manière étanche, par exemple grâce à un joint d'étanchéité 15, dans la dite extrémité amincie 13 du col 12. L'inflammateur 14 peut être un inflammateur électrique ou un inflammateur à percussion.

Un capuchon cylindrique 16 en métal très fin et facilement fragmentable est emmanché autour du dit col 12.

L'espace compris entre le capuchon 16 et l'inflammateur 14 est rempli par une poudre d'allumage 17, comme, par exemple une poudre de type B/KNO₃.

La bague de fermeture 6 porte ainsi un dispositif d'allumage cylindrique constitué par le capuchon 16, le col 12, l'inflammateur 14 et la poudre 17. Ce dispositif d'allumage pénètre à l'intérieur du corps du générateur 1.

Autour de ce dispositif d'allumage est disposé un chargement pyrotechnique 18 en forme de bloc annulaire. Ce chargement est constitué, par un propergol composite à liant silicone.

On entend par propergol composite une composition pyrotechnique constituée par un liant et contenant une charge oxydante. Le bloc de chargement pyrotechnique ne devant pas se déformer dans le temps en fonction des variations de température, le liant sera un liant réticulé. Pour des questions de vitesse de combustion la charge oxydante sera constituée par du perchlorate d'ammonium. Dans ce cas, pour des considérations de non toxicité des gaz de combustion, la composition contiendra un capteur de chlore comme le nitrate de sodium qui, au moment de la combustion, fixe le chlore du perchlorate sous forme de chlorure de sodium.

Une famille préférée de propergols composites dans le cadre de la présente invention est constituée par les propergols à liant silicone chargés avec un mélange de perchlorate d'ammonium et de nitrate de sodium tels que décrits dans la demande de brevet français FR-A-2 728 562 (no. d'enregistrement national 94 15459).

En effet de tels propergols peuvent facilement être extrudés en continu sous forme de blocs annulaires.

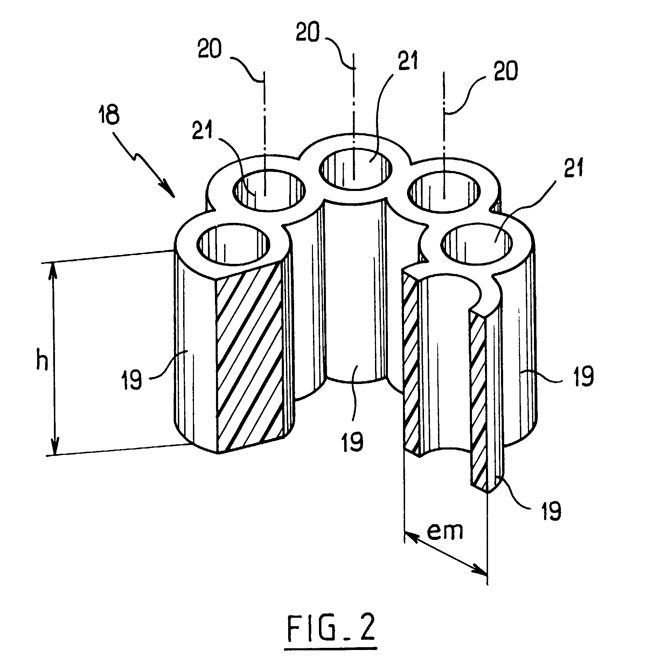

On a représenté à la figure 2 une forme préférée d'un chargement 18 selon l'invention.

Ce chargement est sous forme d'un bloc constitué par une pluralité de tubes cylindriques creux 19, à axes 20 parallèles, imbriqués les uns dans les autres de manière à être légèrement sécants comme représenté sur la figure 2. De manière caractéristique, le bloc 18 présente donc une pluralité de canaux cylindriques creux 21 dont les axes 20 sont équidistants de l'axe 22 du générateur. Cette géométrie qui offre une très grande surface à brûler pour une faible épaisseur à brûler est très favorable à une bonne progressivité de la combustion du chargement 18 et favorise un déploiement correct du coussin de protection non représenté sur les figures.

Toutefois afin d'assurer ce résultat, il est nécessaire que le chargement pyrotechnique puisse être allumé simultanément sur toutes ses surfaces libres et pour cela il est nécessaire que les gaz chauds provenant du dispositif d'allumage puissent enrober l'intégralité des surfaces libres du bloc constituant le chargement générateur de gaz.

A cette fin le chargement pyrotechnique 18 doit obéir à une double condition géométrique.

D'une part la hauteur **h** du chargement pyrotechnique 18 doit être inférieure à la distance d₁ existant à l'intérieur du corps du générateur entre les surfaces intérieures de la bague de fermeture 6 et du couvercle 2.

Préférentiellement cette hauteur **h** sera même inférieure à la hauteur de la paroi latérale 3 comprise entre la face supérieure 7 de la bague de fermeture 6 et la base des orifices 4, comme représenté à la figure 1.

D'autre part l'épaisseur maximale eₘ du chargement annulaire 18, mesurée sur un rayon de ce chargement, doit être inférieure à la distance radiale d₂ séparant, à l'intérieur du corps du générateur, la surface intérieure de la paroi latérale 3 et le capuchon 16 du dispositif d'allumage.

Du fait de l'existence de ces conditions géométriques il existe à l'intérieur du générateur 1 un volume "mort" qui n'est pas occupé par le chargement pyrotechnique 18 ni par le dispositif d'allumage. La demanderesse a observé que le rapport **R** entre ce volume mort et le volume du bloc annulaire du chargement pyrotechnique 18 doit préférentiellement satisfaire à la relation : 1 ≤ R ≤ 2.

Ce rapport **R** sera avantageusement voisin de 1,4.

Compte-tenu de ces impératifs fonctionnels il est nécessaire de prévoir entre le chargement pyrotechnique 18 et la bague de fermeture 6 d'une part et entre le chargement 18 et la base 2 d'autre part, des moyens de calage qui laissent circuler les gaz.

Dans le cas du générateur représenté à la figure 1 on a ainsi prévu entre la bague de fermeture 6 et le chargement 18 un ressort de calage 23, et entre le chargement 18 et le couvercle 2 une pièce de calage 24.

Cette pièce de calage a la forme d'un trépied prenant appui d'une part sur le bloc 18 et d'autre part contre la face 26 de l'enveloppe 25 qui sera décrite un peu plus loin. Ce trépied 24 est constitué par de l'acier inoxydable fin.

Afin de protéger le chargement 18 et le dispositif d'allumage de l'humidité, une enveloppe 25 de métal très fin est interposée, à l'intérieur du corps du générateur, entre le chargement pyrotechnique 18 et les surfaces intérieures de la paroi latérale 3 et de la base 2 de façon à obturer les orifices 4 et à les rendre étanche aux gaz.

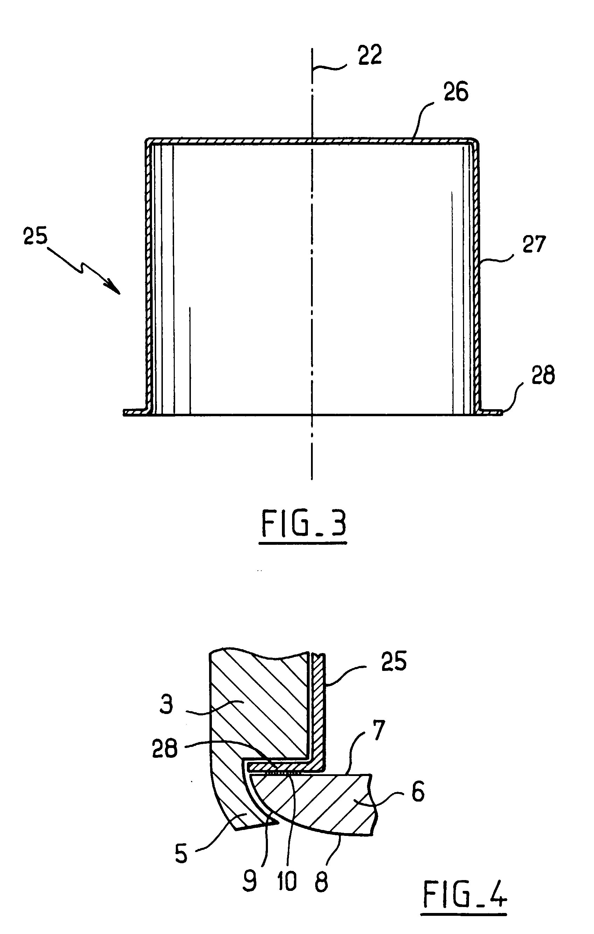

Selon une première variante de réalisation de l'invention, représentée plus particulièrement aux figures 3 et 4, la dite enveloppe 25 a la forme d'un boîtier cylindrique constitué par une paroi cylindrique 27 fermée à l'une de ses extrémités par une face circulaire 26, l'autre extrémité étant ouverte et terminée par un rebord annulaire externe 28. Ce rebord annulaire 28 est pincé entre la paroi latérale 3 du corps du générateur et la bague 6 de fermeture lors du sertissage de cette dernière. Le chargement pyrotechnique 18 et le dispositif d'allumage se trouvent ainsi isolés, de manière étanche, des orifices 4.

Avantageusement la face 7 de la bague 6 et le rebord annulaire 28 de l'enveloppe 25 seront collés l'un à l'autre à l'aide d'un joint 10 de colle cyano-acrylique anaérobie qui assure une fonction de joint isolant.

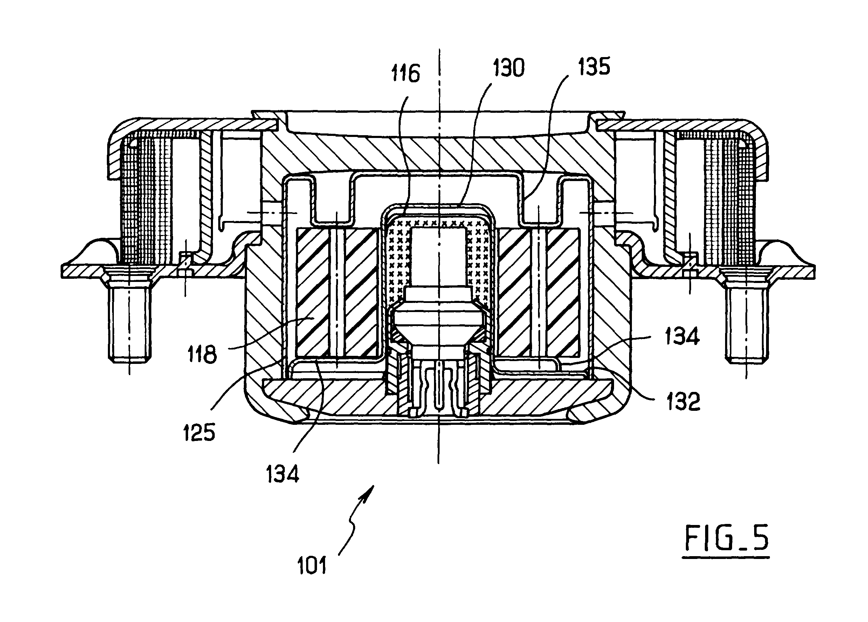

On a représenté aux figures 5 à 8 une seconde variante de réalisation de l'enveloppe de métal fin selon l'invention.

Dans un générateur 101 analogue à celui qui vient d'être décrit et qui ne sera donc pas décrit en détail, un bloc annulaire de chargement pyrotechnique 118 contenu dans une enveloppe de métal fin 125 qui a la forme d'un boîtier cylindrique fermé à son extrémité supérieure par une face circulaire 129 sensiblement plane et à son extrémité inférieure par une face circulaire 127 présentant un logement cylindrique central 130 qui enserre le dispositif d'allumage 116.

Ce boîtier est constitué par deux éléments : un élément inférieur 127 et un élément supérieur 126 qui, assemblés l'un à l'autre, constituent les parois du boîtier 125. Ces éléments sont réalisés dans un matériau qui peut se rompre sous l'effet d'une augmentation prédéterminée de la pression ambiante, correspondant environ aux deux tiers de la pression de fonctionnement du générateur ; en général il s'agira d'une augmentation de pression voisine de 10 MPa. Le boîtier 125 présente sur sa face plane inférieure 127 un logement cylindrique central 130.

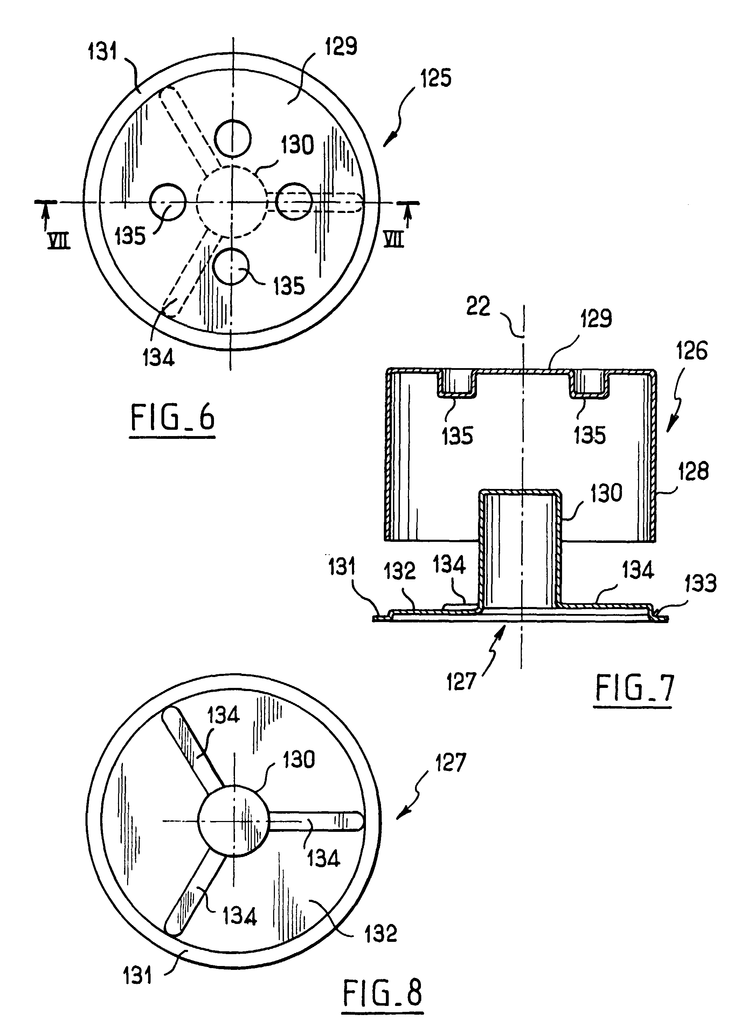

Comme représenté aux figures 7 et 8 l'élément inférieur 127 du boîtier 125 est de forme générale cylindrique et sera constitué par une feuille mince d'aluminium, ou d'un autre métal, emboutie de manière à présenter un rebord circulaire inférieur 131, une face plane 132 qui constituera la face plane inférieure du boîtier 125 et une partie cylindrique centrale relevée qui constituera le logement 130 du boîtier 125.

L'élément supérieur 126 du boîtier 125 a la forme générale d'un capuchon cylindrique avec une face plane 129 et une paroi latérale 128 dont le diamètre intérieur est égal au diamètre extérieur de la face plane 132 de l'élément 127.

Le bloc annulaire 118 de propergol est disposé autour du logement central 130 et les deux éléments 126 et 127 sont assemblés de manière étanche l'un à l'autre.

Cet assemblage peut se faire par sertissage du rebord inférieur 131 ou par collage ou soudure par laser de l'extrémité inférieure de la paroi latérale 128 de l'élément supérieur 126 le long de la surface latérale d'emboutissage 133 de la face plane 132 de l'élément inférieur 127.

De manière caractéristique les surfaces intérieures des faces planes 129 et 127 du boîtier 125 présentent des bossages internes 134 et 135. Ces bossages ont une double fonction. D'une part ils permettent de caler le bloc 118 de propergol dans le boîtier 125 et d'autre part ils permettent d'assurer, au moment de l'allumage, une circulation gazeuse entre les faces planes du boîtier 125 et le bloc 118. Ces bossages peuvent revêtir la forme de nervures radiales comme représenté pour l'élément inférieur 127 dont la face plane 132 porte trois nervures radiales 134 disposées à 120°. Ces bossages peuvent également revêtir la forme de bossages cylindriques comme représenté pour l'élément supérieur 126 dont la face plane 129 porte quatre bossages cylindriques 135 disposés à 90°.

Ainsi selon la seconde variante de réalisation de l'invention, chacune des faces circulaires 127 ou 129 de l'enveloppe 125 peut incorporer les moyens de calage du chargement pyrotechnique 118 sous forme de bossages cylindriques 135 ou de nervures radiales 134, ce qui simplifie encore les opérations d'assemblage du générateur. Par ailleurs, selon cette variante, l'enveloppe 125 qui constitue un boîtier complet autour du chargement pyrotechnique 118, assure la protection de ce dernier pendant les phases de manutention préalables à son intégration dans le générateur.

Les compositions pyrotechniques utilisées dans le cadre de la présente invention ont, comme il a déjà été dit, un excellent rendement gazeux et produisent essentiellement des molécules gazeuses servant à gonfler le coussin de protection. Les seuls résidus solides produits sont de taille micronique dont l'entrée dans un coussin de protection n'est pas génante.

Toutefois, si l'on veut éviter l'entrée de ces résidus solides dans le coussin, on peut le faire par simple condensation du chlorure de sodium ou de la silice produits sur des grilles placées à l'extérieur du générateur, selon le troisième mode de réalisation de l'invention qui est maintenant décrit en détail en faisant à nouveau référence à la figure 1.

La paroi latérale 3 présente un épaulement externe 29 qui est situé sous les orifices 4 et qui supporte une bague annulaire extérieure 30.

Par ailleurs la base 2 présente sur sa périphérie supérieure un rebord circulaire 31 dont le diamètre est légèrement inférieur au diamètre extérieur de la base 2 elle-même de manière à ménager en périphérie de la base 2 une portée plane 32 sur laquelle peut prendre appui un diffuseur annulaire 33 maintenu par sertissage du rebord 31. Avantageusement ce diffuseur 33 présente une extrémité 34 recourbé en direction de la bague 30.

Dans l'espace compris entre la dite bague 30 et le dit diffuseur 33 est placé un déflecteur 35 constitué par une couronne circulaire présentant des ouvertures 36 dans sa partie supérieure.

Entre le déflecteur 35 et l'extrémité 34 du diffuseur 33 sont coincées des grilles circulaires 38,39 et 40 faisant fonction de condenseur thermique pour le chlorure de sodium et la silice. La grille extérieure 40 présente une extrémité supérieure recourbée 37 servant à caler les autres grilles.

La bague extérieure 30 est également munie sur sa face inférieure de goujons 42 destinés à assurer la fixation du générateur et du coussin gonflable qui viendra entourer la dite bague.

Avantageusement la bague extérieure 30 présente sur sa face supérieure au moins une nervure 41 destinée à faciliter le positionnement correct du condenseur et du déflecteur. Cette nervure 41 peut le cas échéant, être interrompue, comme représenté sur les figures 1 et 5, pour permettre la mise en place des goujons 42.

Le fonctionnement d'un générateur tel que présenté aux figures 1 à 4 est le suivant. En cas de collision, un signal provenant d'un détecteur de choc provoque la mise à feu de l'inflammateur 14 qui, à son tour, allume la poudre d'allumage 17. Les gaz de combustion de cette dernière provoquent la rupture du capuchon 16 et viennent enrober toutes les surface libres du bloc de chargement pyrotechnique 18 grâce aux espaces libres existant tout autour de ce bloc. Le bloc 18 est ainsi mis à feu sur toutes ses surfaces libres et libère des gaz de combustion. Lorsque la montée en pression dans le corps du générateur atteint une valeur prédéterminée correspondant environ aux deux tiers de la pression stable de fonctionnement du chargement 18, les parties de l'enveloppe 25 situées en regard des orifices 4 se rompent et les gaz de combustion provenant du chargement 18 quittent le corps du générateur et sont répartis par le déflecteur 35 sur tout le pourtour de ce dernier qu'ils quittent par les ouvertures 36 pour traverser les grilles 38,39 et 40 sur lesquelles le chlorure de sodium et la silice présents se condensent. Les gaz ainsi débarassés en grande partie des résidus solides pénètrent alors dans le coussin gonfable par l'espace libre circulaire 43 existant entre l'extrémité recourbée 34 du diffuseur 33 et la bague annulaire 30.

Le fonctionnement d'un générateur tel que représenté aux figures 5 à 8 est tout à fait analogue, étant précisé que les gaz provenant du dispositif d'allumage 116 doivent, pour allumer le chargement 118, rompre la paroi du logement 130 du boîtier constituant l'enveloppe de métal fin 125.

Un générateur pyrotechique de gaz selon l'invention trouve son application préférée comme générateur de gaz pour un coussin gonfable situé dans le volant d'un véhicule automobile pour protéger le conducteur de ce véhicule ou situé dans la planche de bord pour protéger le passager avant.

### Exemple :

On a fabriqué un générateur conforme à celui représenté à la figure 1.

Le corps du générateur était en acier inoxydable et répondait aux caractéristiques suivantes :
- hauteur totale : 35,5mm
- diamètre extérieur de la paroi latérale 3 : 47mm.

La bague de fermeture 6 était également en acier inoxydable et portait un inflammateur de type DD1714PR de Davey Bickford. Cet inflammateur avait une résistance électrique de 2,15 ohms.

L'enveloppe 25 était en aluminium d'épaisseur 0,2mm.

Le bloc 18 de propergol était conforme à celui représenté à la figure 2 et pesait 19g. Sa composition était la suivante :
- liant silicone : 20 parties en poids,
- perchlorate d'ammonium : 47 parties en poids,
- nitrate de sodium : 33 parties en poids.

La paroi latérale 3 portait 4 orifices cylindriques 4 de diamètre 3,5mm.

Le diffuseur 33 avait un diamètre extérieur de 80mm.

La grille de condensation 38 était une grille de maille 2,1mm x 2,1mm faite avec un fil métallique de diamètre 1mm, la grille entourait une fois le générateur.

Les repères 39 et 40 représentent les enroulements autour du générateur de deux grilles de maille 1,0mm x 1,0mm faite avec un fil métallique de diamètre 0,5mm.

Le générateur a été mis à feu dans un réservoir de 60 litres.

La pression maximale dans le réservoir a été de 0,26 MPa.

La durée de combustion à 90% de la pression maximale a été de 33ms (millisecondes).

## Revendications

1. Générateur (1) pyrotechnique de gaz pour coussin gonflable destiné à protéger les occupants d'un véhicule automobile, comprenant :
**i)** un corps cylindrique creux constitué par une base circulaire (2) prolongée par une paroi latérale cylindrique (3), la dite paroi latérale présentant à son extrémité solidaire de la dite base (2) des orifices (4) mettant en communication l'intérieur et l'extérieur du dit corps creux,
**ii)** une bague circulaire de fermeture (6) possédant un orifice central (11) dans lequel est fixé, de manière étanche aux gaz un dispositif d'allumage (14,16,17) cylindrique qui pénètre à l'intérieur du dit corps creux,
**iii)** un chargement pyrotechnique (18) en forme de bloc annulaire disposé à l'intérieur du dit corps creux autour du dit dispositif d'allumage (14,16,17), la hauteur (**h**) du dit chargement annulaire (18) étant inférieure à la distance (d1) existant à l'intérieur du dit corps creux entre les surfaces intérieures de la bague de fermeture (6) et de la dite base (2) et l'épaisseur maximale (eₘ) du dit chargement annulaire (18) étant inférieure à la distance radiale (d₂) séparant, à l'intérieur du dit corps creux la surface intérieure de la paroi latérale (3) et le dispositif d'allumage (16),
caractérisé en ce que :
**iv)** la dite bague circulaire de fermeture (6) est sertie dans l'extrémité (5) de la paroi latérale (3) opposée à la dite base (2),
**v)** le dit chargement pyrotechnique est un propergol à liant silicone chargé avec un mélange de perchlorate d'ammonium et de nitrate de sodium,
**vi)** des moyens de calages (23,24) qui laissent circuler les gaz sont disposés entre la bague de fermeture (6) et le chargement (18) d'une part, et entre la base (2) et le chargement (18) d'autre part, de manière à ce que les gaz provenant du dispositif d'allumage (14,16,17) puissent enrober l'intégralité des surfaces libres du chargement pyrotechnique (18).
**vii)** et en ce qu'à l'intérieur du dit corps creux, une enveloppe (25) de métal fin est interposée entre le dit chargement (18) et les surfaces intérieures de la dite paroi latérale (3) et de la dite base (2) de façon à obturer, de manière étanche aux gaz, les dits orifices (4).

2. Générateur selon la revendication 1 caractérisé en ce que le dit chargement (18) annulaire pyrotechnique comporte une pluralité de canaux cylindriques creux internes (21) dont les axes (20) sont équidistants de l'axe (22) du générateur.

3. Générateur selon la revendication 1 caractérisé en ce que la dite bague de fermeture (6) possède une face supérieure (7) plane et une face inférieure (8) formant avec la dite face supérieure (7) un rebord arrondi (9).

4. Générateur selon la revendication 3 caractérisé en ce qu'un col cylindrique creux (12) présentant une extrémité amincie (13) est emmanché de manière étanche dans l'orifice central (11) présenté par la bague de fermeture (6).

5. Générateur selon la revendication 4 caractérisé en ce que le dit dispositif d'allumage comprend un capuchon cylindrique (16) qui entoure le dit col (12) et un inflammateur (14) serti de manière étanche dans la dite extrémité amincie (13) du col (12).

6. Générateur selon la revendication 5 caractérisé en ce que l'espace compris entre le dit capuchon (16) et l'inflammateur (14) est rempli par une poudre d'allumage (17).

7. Générateur selon la revendication 1 caractérisé en ce que la dite enveloppe (25) de métal fin a la forme d'un boîtier cylindrique fermé à l'une de ses extrémités par une face circulaire (26), l'autre extrémité étant ouverte.

8. Générateur selon la revendication 7 caractérisé en ce que l'extrémité ouverte (28) du dit boîtier cylindrique est pincée dans le sertissage de la bague de fermeture (6) par l'extrémité inférieure (5) de la paroi latérale (3) du corps du générateur.

9. Générateur selon la revendication 1 caractérisé en ce que la dite enveloppe (125) de métal fin a la forme d'un boîtier cylindrique fermé à son extrémité supérieure par une face circulaire (129), sensiblement plane et à son extrémité inférieure par une face circulaire (127) présentant un logement cylindrique central (130).

10. Générateur selon la revendication 9 caractérisé en ce que chacune des faces circulaires (127,129) du dit boîtier incorpore les moyens de calages du chargement pyrotechniques.

11. Générateur selon la revendication 10 caractérisé en ce que les dits moyens de calage sont constitués par des bossages cylindriques (135) et des nervures radiales (134) qui laissent circuler les gaz.

12. Générateur selon la revendication 1 caractérisé en ce que la paroi latérale (3), présente un épaulement externe (29) situé sous les orifices (4) et supporte une bague extérieure (30).

13. Générateur selon la revendication 12 caractérisé en ce qu'un diffuseur externe (33) est serti sur le pourtour de la base (2).

14. Générateur selon la revendication 13 caractérisé en ce qu'un déflecteur (35) et un condenseur (38,39,40) sont coincés entre la dite bague extérieure (30) et le dit diffuseur externe (33).

15. Générateur selon la revendication 14 caractérisé en ce que la dite bague extérieure (30) présente sur sa face supérieure au moins une nervure (41) de positionnement.

16. Générateur selon la revendication 1 caractérisé en ce que le rapport **R** entre le volume mort existant à l'intérieur du corps cylindrique creux du dit générateur et le volume du chargement pyrotechnique (18) satisfait à la relation :
1 ≤ R ≤ 2

17. Générateur selon la revendication 16 caractérisé en ce que le rapport **R** est voisin de 1,4.

## Patentansprüche

1. Pyrotechnischer Gasgenerator (1) für einen aufblasbaren Airbag, der dazu bestimmt ist, die Insassen eines Kraftfahrzeuges zu schützen, mit
i) einem zylindrischen Hohlkörper, der von einem kreisförmigen Fuß (2) gebildet ist, der durch eine zylindrische Seitenwand (3) verlängert ist, wobei die genannte Seitenwand an ihrem Ende, das fest mit dem Fuß (2) verbunden ist, Öffnungen (4) aufweist, die das Innere und das Äußere des genannten Hohlkörpers in Verbindung setzen,
ii) einem kreisförmigen Verschlußring (6), der eine mittige Öffnung (11) aufweist, in der gasdicht eine zylindrische Zündvorrichtung (14, 16, 17) befestigt ist, die in das Innere des genannten Hohlkörpers eindringt,
iii) einer pyrotechnischen Ladung (18) in Form eines kreisringförmigen Blocks, der im Inneren des genannten Hohlkörpers rund um die genannte Zündvorrichtung (14, 16, 17) angeordnet ist, wobei die Höhe (h) der genannten kreisringförmigen Ladung (18) kleiner ist als der Abstand (d1), der im Inneren des genannten Hohlkörpers zwischen den Innenoberflächen des Verschlußrings (6) und des genannten Fußes (2) vorliegt, und wobei die größte Dicke (eₘ) der genannten, kreisringförmigen Ladung (18) kleiner ist als der radiale Abstand (d₂), der im Inneren des genannten Hohlkörpers die Innenoberfläche der Seitenwand (3) und die Zündvorrichtung (16) trennt,
dadurch gekennzeichnet, daß
iv) der genannte, kreisförmige Verschlußring (6) in das Ende (5) der Seitenwand (3) eingesetzt ist, das dem genannten Fuß (2) entgegengesetzt ist,
v) die genannte, pyrotechnische Ladung Propergol mit Silikonbinder ist, das mit einer Mischung aus Ammoniumperchlorat und Natriumnitrat versetzt ist,
vi) Anstellmittel (23, 24), die die Gase zirkulieren lassen, zwichen dem Verschlußring (6) und der Ladung (18) einerseits, sowie zwischen dem Boden (2) und der Ladung (18) andererseits derart angeordnet sind, daß die Gase, die von der Zündvorrichtung (14, 16, 17) herkommen, die vollständigen, freien Oberflächen der pyrotechnischen Ladung (18) umhüllen können, und
vii) daß im Inneren des genannten Hohlkörpers eine Umhüllung (25) aus dünnem Metall zwischen der genannten Ladung (18) und den Innenoberflächen der genannten Seitenwand (3) und des genannten Fußes (2) derart angeordnet ist, daß sie gasdicht die genannten Öffnungen (4) verschließt.

2. Generator nach Anspruch 1, dadurch gekennzeichnet, daß die genannte kreisringförmige, pyrotechnische Ladung (18) eine Anzahl zylindrischer Innen-Hohlkanäle (21) aufweist, deren Achsen (20) in gleichen Abständen zur Achse (22) des Generators angeordnet sind.

3. Generator nach Anspruch 1, dadurch gekennzeichnet, daß der genannte Verschlußring (6) eine obere, ebene Stirnfläche (7) und eine untere Stirnfläche (8) besitzt, die zusammen mit der oberen Stirnfläche (7) einen abgerundeten Rand (9) bildet.

4. Generator nach Anspruch 3, dadurch gekennzeichnet, daß ein hohler, zylindrischer Hals (12) ein verdünntes Ende (13) aufweist und dicht in die Mittelöffnung (11) eingepreßt ist, die vom Verschlußring (6) dargeboten wird.

5. Generator nach Anspruch 4, dadurch gekennzeichnet, daß die genannte Zündvorrichtung eine zylindrische Kappe (16) aufweist, die den genannten Hals (12) umgibt, sowie einen Zünder (14), der dicht in das genannte, verdünnte Ende (13) des Halses (12) eingesetzt ist.

6. Generator nach Anspruch 5, dadurch gekennzeichnet, daß der Raum, der zwischen der genannten Kappe (16) und dem Zünder (14) vorliegt, mit einem Zündpulver (17) ausgefüllt ist.

7. Generator nach Anspruch 1, dadurch gekennzeichnet, daß die genannte Umhüllung (25) aus dünnem Metall die Form eines zylindrischen Gehäuses aufweist, das am einen seiner Enden durch eine kreisförmige Stirnfläche (26) verschlossen ist, während das andere Ende offen ist.

8. Generator nach Anspruch 7, dadurch gekennzeichnet, daß das offene Ende (28) des genannten, zylindrischen Gehäuses in die Verbindung des Verschlußringes (6) mit dem unteren Ende (5) der Seitenwand (3) des Generatorkörpers eingeklemmt ist.

9. Generator nach Anspruch 1, daduch gekennzeichnet, daß die genannte Umhüllung (125) aus dünnem Metall die Form eines zylindrischen Gehäuses aufweist, das an seinem oberen Ende durch eine kreisförmige, im wesentlichen ebene Stirnfläche (129) verschlossen ist, und an seinem unteren Ende durch eine kreisförmige Stirnfläche (127), die einen mittigen, zylindrischen Sitz (130) aufweist.

10. Generator nach Anspruch 9, dadurch gekennzeichnet, daß jede der kreisförmigen Stirnflächen (127, 129) des genannten Gehäuses Anstellmittel für die pyrotechnische Ladung umfaßt.

11. Generator nach Anspruch 10, dadurch gekennzeichnet, daß die genannten Anstellmittel durch zylindrische Buckel (135) und durch radiale Rippen (134) gebildet sind, die die Gase zirkulieren lassen.

12. Generator nach Anspruch 1, dadurch gekennzeichnet, daß die Seitenwand (3) eine Außenschulter (29) aufweist, die unter den Öffnungen (4) gelegen ist und einen Außenring (30) trägt.

13. Generator nach Anspruch 12, dadurch gekennzeichnet, daß ein äußerer Diffusor (33) auf dem Umfang des Fußes (2) eingesetzt ist.

14. Generator nach Anspruch 13, dadurch gekennzeichnet, daß ein Abweiser (35) und ein Kondensator (38, 39, 40) zwischen dem genannten Außenring (30) und dem genannten, äußeren Diffusor (33) eingeklemmt sind.

15. Generator nach Anspruch 14, dadurch gekennzeichnet, daß der genannte Außenring (30) auf seiner oberen Stirnfläche mindestens eine Positionierungsrippe (41) aufweist.

16. Generator nach Anspruch 1, dadurch gekennzeichnet, daß das Verhältnis R zwischen dem toten Volumen, das im Inneren des zylindrischen Körpers des genannten Generators vorliegt, und dem Volumen der pyrotechnischen Ladung (18) der folgenden Zuordnung genügt:
1 ≤ R ≤ 2

17. Generator nach Anspruch 16, dadurch gekennzeichnet, daß das Verhältnis R 1,4 nahekommt.

## Claims

1. Pyrotechnic gas generator (1) for an airbag intended to protect the occupants of a motor vehicle, comprising:
i) a hollow cylindrical body consisting of a circular base (2) extended by a cylindrical side wall (3), the said side wall having, at its end secured to the said base (2), orifices (4) establishing communication between the inside and the outside of the said hollow body,
ii) a circular closing ring (6) having a central orifice (11) in which a cylindrical igniting device (14, 16, 17) which penetrates inside the said hollow body is fixed in a gas-tight fashion,
iii) a pyrotechnic charge (18) in the form of an annular block arranged inside the said hollow body around the said igniting device (14, 16, 17), the height (h) of the said annular charge (18) being less than the distance (d1) existing inside the said hollow body between the inner surfaces of the closing ring (6) and the said base (2), and the minimum thickness (eₘ) of the said annular charge (18) being less than the radial distance (d₂) inside the said hollow body between the inner surface of the side wall (3) and the igniting device (16),
characterized in that:
iv) the said circular closing ring (6) is crimped into the opposite end (5) of the side wall (3) from the said base (2),
v) the said pyrotechnic charge is a propellant with silicone binder filled with a mixture of ammonium perchlorate and sodium nitrate,
vi) spacing means (23, 24) which allow the gases to circulate are arranged between the closing ring (6) and the charge (18), on the one hand, and between the base (2) and the charge (18), on the other hand, so that the gases coming from the igniting device (14, 16, 17) can cover all of the free surfaces of the pyrotechnic charge (18),
vii) and in that, inside the said hollow body, a thin metal cover (25) is interposed between the said charge (18) and the inner surfaces of the said side wall (3) and of the said base (2) so as to close off the said orifices (4) in a gas-tight fashion.

2. Generator according to Claim 1, characterized in that the said annular pyrotechnic charge (18) has a plurality of hollow internal cylindrical channels (21) whose axes (20) are equidistant from the axis (22) of the generator.

3. Generator according to Claim 1, characterized in that the said closing ring (6) has a plane upper face (7) and a lower face (8) which forms a rounded edge (9) with the said upper face (7).

4. Generator according to Claim 3, characterized in that a hollow cylindrical neck (12) having a tapered end (13) is fitted in a leaktight fashion into the central orifice (11) of the closing ring (6).

5. Generator according to Claim 4, characterized in that the said igniting device comprises a cylindrical cap (16), which encloses the said neck (12), and an igniter (14) crimped in a leaktight fashion into the said tapered end (13) of the neck (12).

6. Generator according to Claim 5, characterized in that the space between the said cap (16) and the igniter (14) is filled with an igniting powder (17).

7. Generator according to Claim 1, characterized in that the said thin metal cover (25) is in the form of a cylindrical case closed at one of its ends by a circular face (26), the other end being open.

8. Generator according to Claim 7, characterized in that the open end (28) of the said cylindrical case is pinched in the crimp of the closing ring (6) by the lower end (5) of the side wall (3) of the body of the generator.

9. Generator according to Claim 1, characterized in that the said thin metal cover (125) is in the form of a cylindrical case closed at its upper end by a substantially plane circular face (129) and, at its lower end, by a circular face (127) having a central cylindrical recess (130).

10. Generator according to Claim 9, characterized in that the spacer means for the pyrotechnic charge are incorporated in each of the circular faces (127, 129) of the said case.

11. Generator according to Claim 10, characterized in that the said spacing means consist of cylindrical studs (135) and radial grooves (134) which allow the gases to circulate.

12. Generator according to Claim 1, characterized in that the side wall (3) has an outer shoulder (29) located under the orifices (4) and supports an outer ring (30).

13. Generator according to Claim 12, characterized in that an external diffuser (33) is crimped onto the periphery of the base (2).

14. Generator according to Claim 13, characterized in that a deflector (35) and a condenser (38, 39, 40) are wedged between the said outer ring (30) and the said external diffuser (33).

15. Generator according to Claim 14, characterized in that the said outer ring (30) has at least one positioning rib (41) on its upper face.

16. Generator according to Claim 1, characterized in that the ratio R between the dead volume existing inside the hollow cylindrical body of the said generator and the volume of the pyrotechnic charge (18) satisfies the relationship:
1 ≤ R ≤ 2

17. Generator according to Claim 16, characterized in that the ratio R is close to 1.4.
